# EUROPÄISCHE PATENTSCHRIFT

(11) **EP 0 758 597 B1**
(45) Veröffentlichungstag und Bekanntmachung des Hinweises auf die Patenterteilung: **24.05.2000**
(21) Anmeldenummer: 96111722.3
(22) Anmeldetag: 20.07.1996
(51) Int. Cl.: B60R 19/02, B62D 21/15, B60R 19/16

(54) **Sicherheitsstossstange für Personenkraftwagen**
Safety bumper for motor cars
Pare-chocs de sécurité pour voitures automobiles

(30) Priorität: 12.08.1995 DE 19529770; 06.09.1995 DE 19532858
(43) Veröffentlichungstag der Anmeldung: 19.02.1997
(73) Patentinhaber: SCHIMMELPFENNIG, Karl-Heinz, D-48167 Münster (DE)
(72) Erfinder: SCHIMMELPFENNIG, Karl-Heinz, D-48167 Münster (DE)
(74) Vertreter: Habbel, Hans-Georg, Dipl.-Ing.

(56) Entgegenhaltungen:
- DE-C- 854 157
- FR-A- 2 396 684
- US-A- 3 997 209
- US-A- 4 182 529
- US-A- 4 231 601

## Beschreibung

Die Erfindung bezieht sich auf eine Sicherheitsstoßstange für Personenkraftwagen.

Abgerundete Stoßstangen sind seit langem bei Kraftfahrzeugen im Einsatz, z. B. bei dem sogenannten "Käfer", wobei die halbrund ausgebildete Stoßstange im Abstand vom Fahrzeug verlief und über einfache Streben mit der Rahmenkonstruktion des Fahrzeuges verbunden war. Diese Stoßstange war nicht in der Lage, im Falle eines Anpralls gegen ein beliebiges Hindernis einen wirksamen Schutz zu schaffen, da sie sich zu schnell verbog und ein Eindringen von Fahrzeugen ineinander nicht verhindern konnte.

Aus der gattungsbildenden DE-C-854 157 bzw. der FR-A-1 021 506 sind Fahrzeuge bekanntgeworden, die mit der heute so bezeichneten Knautschzone ausgerüstet sind. Diese Fahrzeuge bestehen im wesentlichen aus drei Zellen, nämlich einer vorderen und einer hinteren Endzelle und einer mittleren, sogenannten Fahrgastzelle, wobei die Festigkeit dieser so gebildeten Einheit im Bereich eines Fahrgastraumes am größten und davon ausgehend zu den Endteilen stetig oder stufenförmig auf einen Endwert abnimmt. Durch diese Maßnahme soll erreicht werden, daß im Falle einer Kollision möglichst viel Energie an der vorderen und hinteren Endzelle absorbiert wird, aber die sogenannte Fahrgastzelle fest ist und damit die Insassen schützt.

Abweichend von diesem Grundgedanken wird in der US-A-3 110 515 ein Fahrzeug beschrieben, das rundherum mit einer kollisionswiderstandsfähigen Verstärkung ausgerüstet ist. Durch diese über den ganzen Umfang des Fahrzeuges reichende Verstärkung soll erreicht werden, daß die Fahrzeuginsassen geschützt sind. Eine Energieabsorption erfolgt bei diesem Fahrzeug nur durch wellblechartige Außenstrukturen, so daß bei größeren Kollisionen die gesamte Energie auf die in der Fahrgastzelle befindlichen Personen einwirkt. Die Fahrzeuginsassen werden also im Fahrzeug an die Wände geschleudert.

In der US-A-3 068 039 ist eine nachgiebige schwenkbare Stoßstange für Fahrzeuge beschrieben, die die Aufgabe hat, bei Frontkollision von Fahrzeugen miteinander die Kollisionsenergie zu absorbieren, um somit einen Schutz der Fahrzeuginsassen zu schaffen. Diese bekannte Einrichtung ist ebenfalls nicht in der Lage, die erheblichen auftretenden Kräfte zu absorbieren und ein Eindringen von Fahrzeugen ineinander zu verhindern, sondern trotz Einsatz von nachgiebigen Front-Stoßelementen kam es immer noch zu großen Verletzungen der Fahrzeuginsassen.

Die US-A-4 182 529 offenbart die folgenden Merkmale des Anspruchs 1 : eine Sicherheitsstoßstange für einen Personenkraftwagen, wobei die Stoßstange an der Frontpartie des Fahrzeuges vor den Rädern angeordnet, zumindest im Übergang zum Seitenbereich abgerundet ausgebildet ist, die seitlichen Stoßstangenbereiche und der mittlere Stoßstangenbereich jeweils ein in sich struktursteifes Bauteil darstellen, welches im Falle einer teilüberdeckten Kollision mit einem Fahrzeug oder einem Hindernis eine schräge Ebene normal zur Fahrbahnoberfläche bildet und aufgrund ihrer Struktursteifigkeit bei einem Frontalanprall an ein Hindernis die auftretende Stoßkraft vom Kontaktpunkt in die zugeordnete Endzelle weiterleitet.

In dieser Patentschrift wird ein Energieabsorbersystem für Kraftfahrzeuge beschrieben mit einer struktursteifen Stoßstange, die an stoßdämpferartigen Zylindern angeordnet ist, wobei diese Zylinder vom Rahmen des Fahrzeuges getragen werden. Außerdem soll die struktursteife Stoßstange um einen in ihrem mittleren Bereich angreifenden Stoßdämpfer schwenkbar sein. Durch diese Anordnung soll im Fall einer Kollision des Fahrzeuges mit einem Widerstand das Fahrzeug eine Rotationsbewegung um diesen Widerstand ausführen. Bei einer Kollision auf einer Landstraße beispielsweise bedeutet das, daß das kollidierte Fahrzeug entweder von der Straße heruntergeschleudert würde oder entgegen seiner ursprünglichen Fahrtrichtung ausgerichtet zum Stehen kommt, also entgegen dem Fahrzeugstrom ausgerichtet wäre. Außerdem bedeutet die Anordnung der bekannten Stoßdämpferkonstruktion an der Frontseite des Fahrzeuges einen erheblichen konstruktiven Aufwand verbunden mit einer erheblichen Gewichtszunahme Diese Art der Energieabsorption weicht von der heute als vorteilhaft erkannten Energieabsorption in ihrem grundsätzlichen Aufbau grundsätzlich ab und verhindert nicht ein Verhaken der Fahrzeuge mit den miteinander in Kontakt kommenden Felgenhörnern der Räder der beiden Fahrzeuge.

Bei einer teilüberdeckten Frontalkollision verhaken sich die Fahrzeuge an den stoßzugewandten Rädern miteinander. Dies führt zum einen zu einer Rückverlagerung der Räder und Achskörper und zu einer Intrusion dieser Bauteile in den Fahrerfußraum und zum anderen verhindert das Verhaken ein aneinander Abgleiten der Fahrzeuge. Die hohe kinetische Energie der Fahrzeuge vor der Kollision wirkt somit zwangsweise zur Deformation und Intrusion von Fahrzeugteilen ineinander.

Da derartige teilüberdeckte Unfälle sehr häufig sind, d. h. wesentlich häufiger als Frontalkollisionen mit voller Überdeckung, liegt der Erfindung die Aufgabe zugrunde, ein Hilfsmittel zu schaffen, um die Folgen dieser Kollisionsart zu verringern und damit das Leben und die Gesundheit der Fahrzeuginsassen sicherer zu gestalten.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß eine Sicherheitsstoßstange zur Anwendung kommt, die zumindest in ihren Seitenbereichen einen Abgleiteffekt der Fahrzeuge aneinander vorbei bewirkt. Der mittlere Bereich der Sicherheitsstoßstange ist derart struktursteif ausgelegt, daß in die Stoßstange eingeleitete Kräfte im Falle einer Frontalkollision mit großer Überdeckung oder Anprallen an ein beliebiges Hindernis durch die Stoßstange in beide Fahrzeuglängsträger überführt werden und dort eine Wandlung von kinetischer Energie in Deformationsarbeit erfolgt.

Erfolgt ein Anstoß einseitig mit geringer Überdeckung, so wird der stoßzugewandte Längsträger stärker gestaucht als der stoßabgewandte und somit entsteht aufgrund der in sich struktursteifen Auslegung der Sicherheitsstoßstange eine Abgleitebene normal zur Fahrbahnoberfläche. Das Fahrzeug nimmt nur den Betrag an kinetischer Energie auf, den die Deformationselemente der Knautschzone in Verformungsarbeit umwandeln können. Die überschüssige kinetische Energie wird, nachdem das Fahrzeug am Kollisionsgegner abgeglitten ist, im Rahmen des Auslaufweges gewandelt. Dieser Auslaufweg läßt sich dann mit Hilfe von ABS-gestützten Vollverzögerungen bzw. elektronischen Stabilisierungsprogrammen gezielt gestalten.

Darüber hinaus erfolgt nunmehr auch eine niedrige Zellenverzögerung des Fahrzeuges, da die Fahrzeuge aneinander vorbeigleiten, so daß dadurch die Gesundheit und das Leben der Insassen besser geschützt wird. Diese Art der Sicherheitsstoßstangenausbildung ist ein Element zur Hebung der passiven Sicherheit von Straßenfahrzeugen.

Die Sicherheitsstoßstange zeigt eine Kompatibilität zu allen bekannten Pkw-Frontstrukturen. Sie baut auf dem bisherigen passiven Sicherheitssystem von Personenkraftwagen, das sind Deformationszonen an Front und Heck in Verbindung mit einer steifen Fahrgastzelle, auf.

Wesentlich bei der Ausbildung der Sicherheitsstoßstangen ist, daß die Fahrzeuge alle gleich hohe Sicherheitsstoßstangen aufweisen, so daß trotz des Nickeffektes beim Bremsen nicht ein Unterfahren des einen Fahrzeuges unter das andere Fahrzeug erfolgen kann.

Vorzugsweise ist die Sicherheitsstoßstange an der Frontseite der Längsträger des Fahrzeugrahmens angeordnet, und das gleiche gilt auch für die hintere Sicherheitsstoßstange.

Vorzugsweise wird die gesamte Bugschürze des Fahrzeuges als Sicherheitsstoßstange ausgebildet und kann dabei struktursteif ausgebildet sein und beispielsweise aus Leichtmetall bestehen, so daß trotz Einsatz und Ausbildung einer solchen relativ großen Sicherheitsstoßstange das Gewicht des Fahrzeuges nicht erhöht wird.

Ein Ausführungsbeispiel der Erfindung wird nachfolgend anhand der Zeichnungen erläutert. Die Zeichnungen zeigen dabei in
- Fig. 1: die Darstellung einer Kollision bei der bisher bekannten Fahrzeugkonstruktion, in
- Fig. 2: den Effekt der erfindungsgemäßen SicherheitsStoßstange bei zwei kollidierenden Fahrzeugen, in
- Fig. 3: in Draufsicht und schematisch die Ausbildung der Sicherheitsstoßstange am Fahrzeug, in den
- Fig. 4 und 5: die Anordnung und Höhe der Sicherheitsstoßstange, wobei auch die Nickbewegung des Fahrzeuges beim Bremsen einkalkuliert wird und schließlich in den
- Fig. 6 und 7: schematisch eine Draufsicht auf ein Fahrzeug vor und ein Fahrzeug nach einer Kollision.

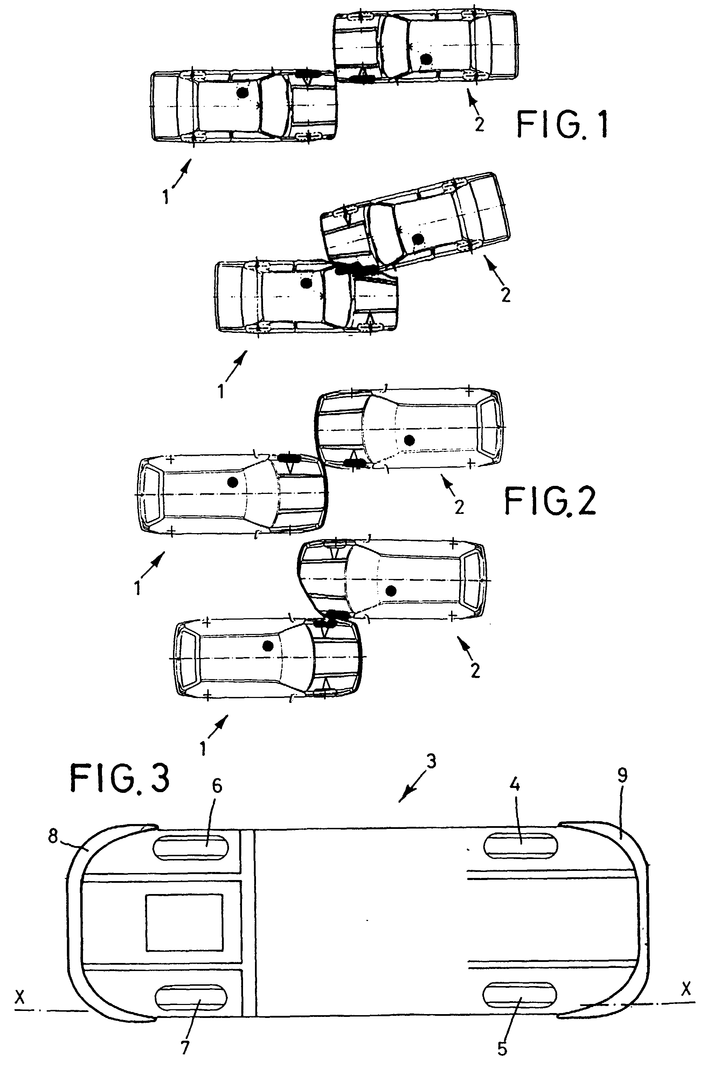

In Fig. 1 sind mit 1 und 2 zwei miteinander kollidierende Fahrzeuge bezeichnet, und es ist erkennbar, daß durch das Verhaken der Vorderräder aneinander, eine Intruision der Fahrzeuge ineinander erzwungen wird. Hierdurch kommt es zu einem abrupten Abbremsen der Fahrzeugbewegung und damit zu einer erheblichen Gefährdung der Fahrzeuginsassen in der Fahrgastzelle.

Die Darstellung in Fig. 2 zeigt schematisch, daß durch den Einsatz der Sicherheitsstoßstange ein Gleiteffekt erzielt wird, durch den die Fahrzeuge aneinander vorbeigleiten, so daß der Abbremseffekt nicht so hoch ist wie im Stand der Technik und damit durch Reduktion der Zellenverzögerung und verhinderten Intrusion die Sicherheit der im Fahrzeug befindlichen Personen verbessert wird.

Fig. 3 zeigt die Ausbildung der beiden Sicherheitsstoßstangen 8 und 9 an der Front- und Heckseite eines Fahrzeuges 3, wobei eine Deformationszone vorgesehen sein kann. Sind die Stoßstangen 8 und 9 struktursteif ausgebildet, wird dadurch erreicht, daß bei einem Anprall an einen Gegenstand geringer Breite, z. B. einem Baum, einem Pfahl od. dgl., die auftretende Stoßkraft vom Kontaktpunkt auf der Stoßstangenoberfläche in beide wie bisher vorhandene Längsträger weitergeleitet wird, so daß eine Intrusion in die Struktur des Fahrzeuges vermieden wird. Die Enden der Sicherheitsstoßstangen 8 und 9 liegen außerhalb der Längsprojektion X - X der Räderaußenseiten der Räder 4 und 5 bzw. 6 und 7, so daß der Freiraum zwischen dem Rad und dem Längsträger der Fahrzeugkarosserie durch die Sicherheitsstoßstangen 8 und 9 abgedeckt wird.

Zusammenfassend ist also festzustellen, daß gemäß der Erfindung eine Sicherheitsstoßstange für Personenkraftwagen vorgeschlagen wird, die an den Längsträgern des Fahrzeuges an der Fahrzeugfrontseite bzw. der Fahrzeugheckseite angeordnet ist

Sie ist im Übergang zur Fahrzeugseite abgerundet gestaltet und reicht im lateralen Bereich von der Front bzw. dem Heck bis zur Vorder- bzw. Hinterkante des Vorder- bzw. Hinterrades.

Die Breite der Stoßstange zwischen den seitlichen Flanken schließt die Spurbreite ein, so daß diese Flanken im Kollisionsfall die Räder seitlich abdecken.

Die Höhe der Stoßstangen deckt nach unten hin die Achse der Räder und nach oben etwa 80 % der Höhe der Frontmaske des Fahrzeuges ab.

Die Sicherheitsstoßstange ist schließlich ein struktursteifes Bauteil, das in sich nicht deformierbar ist, sondern auftreffende Kräfte in den Deformationsbereich des Fahrzeuges weiterleitet bei gleichzeitig glatter Oberfläche, die einen Abgleiteffekt unterstützt.

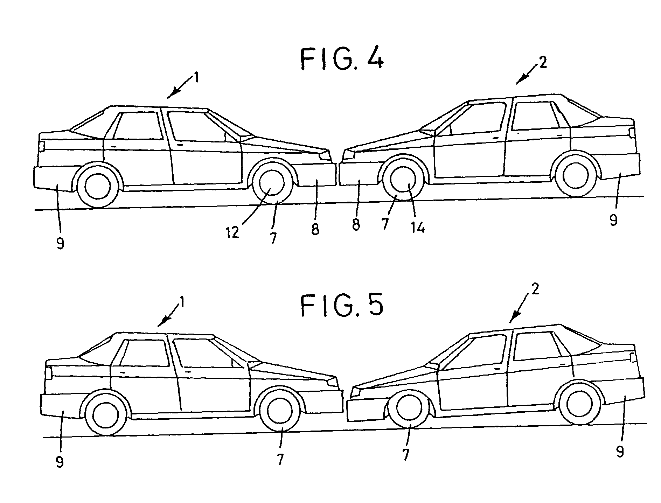

Die Fig. 4 und 5 zeigen, daß die Sicherheitsstoßstangen 8, 9 so hoch ausgebildet sein müssen, daß trotz der beim Bremsen des einen Fahrzeuges auftretenden Nickbewegung die Sicherheitsstoßstangen 8 und 9 immer noch voll wirksam wird und damit ein Unterfahren des anderen Fahrzeuges verhindert wird. Vorzugsweise reicht die Unterkante der Sicherheitsstoßstange bis in den Bereich zwischen der Achse 12 und 14 der Fahrzeugvorderräder 6 und 7 bzw. der Fahrzeughinterräder 4, 5 und der Unterkante der Felge der Fahrzeugräder. Das gleiche gilt selbstverständlich auch für die am Heck des Fahrzeuges angeordnete Sicherheitsstoßstange 9.

Aus der Zeichnung nicht zu erkennen, aber im Rahmen der Erfindung liegend ist die Ausbildung der Sicherheitsstoßstangen 8 und 9 aus struktursteifem Werkstoff, so daß die erforderliche Festigkeit einmal durch den Werkstoff, zum andern auch durch die Struktur der Stoßstange erreicht wird.

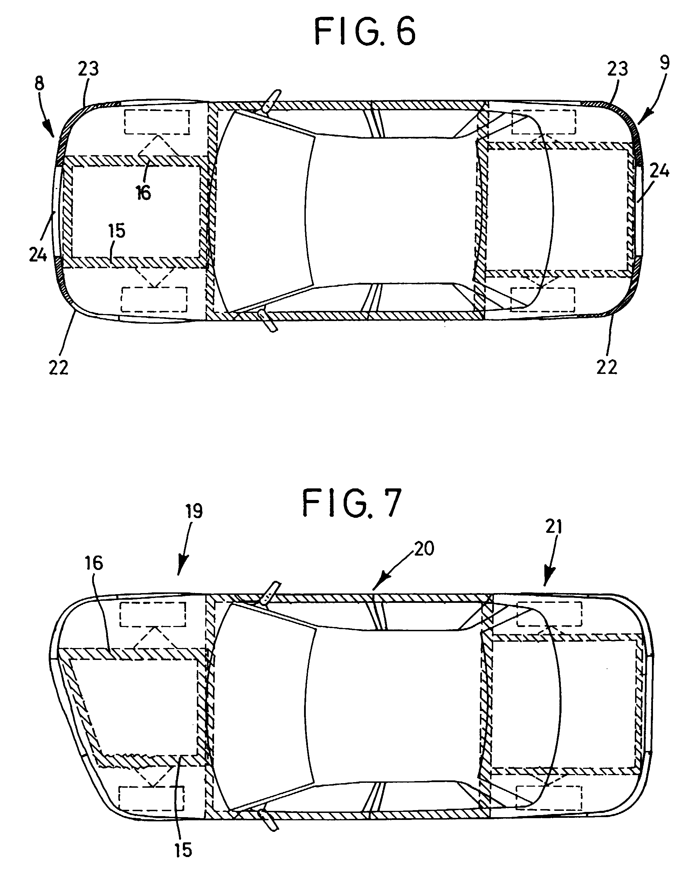

Bei der Darstellung in den Fig. 6 und 7 ist die vordere Sicherheitsstoßstange 8 erkennbar, die an der Frontseite der beiden Längs-träger 15 und 16 des Fahrzeugrahmens angeordnet ist.

Wie im Stand der Technik üblich, weist das Fahrzeug eine vordere Endzelle 19 und eine hintere Endzelle 21 auf sowie eine mittlere Endzelle 20, die als Fahrgastzelle bezeichnet wird und die sehr steif ausgebildet ist, während die vordere Endzelle 19 und die hintere Endzelle 21 Deformationsarbeit leisten kann.

Die Sicherheitsstoßstange 8 bzw. 9 besteht aus einem mittleren Bereich 24, einem seitlichen Bereich 22 und einem anderen seitlichen Bereich 23, wobei dabei die Stoßstange 8 bzw. 9 einteilig ausgebildet sein kann oder alle Bereiche als einzelne Bauteile gestaltet werden können. Die seitlichen Bereiche 23 und 22 sind so steif ausgebildet, das bei einem Auftreffen auf ein Hindernis ein seitlicher Abgleiteffekt erreicht wird. Die vordere und hintere Sicherheitsstoßstange wirkt auch für den Unfallgegner gleichzeitig wie eine Gleitzone. Damit wird die Aufprallenergie nicht mehr vorrangig in Deformationsarbeit umgewandelt, sondern zur Richtungsänderung des Impulses und zum Abgleiten der Fahrzeuge aneinander oder an einem Objekt genutzt. Das Abgleiten erlaubt, die noch vorhandene kinetische Energie nach der Kollision in einer geordneten Auslaufbewegung abzubauen. Erfolgt ein zentrisches Anstoßen an ein Hindernis, wird die Aufprallenergie in berechenbare Deformationsarbeit an der Knautschzone umgewandelt.

## Patentansprüche

1. Sicherheitsstoßstange (8, 9) für eine vordere (19), eine mittlere (20) und eine hintere Endzelle (21) aufweisenden Personenkraftwagen, wobei die Stoßstange jeweils an der Front- und Heckpartie des Fahrzeuges (3) vor bzw. hinter den Rädern (4, 5; 6, 7) angeordnet, zumindest im Übergang zum Seitenbereich abgerundet ausgebildet ist und die vordere (19) und die hintere Endzelle (21) eine geringere Verformungsfestigkeit aufweisen als die mittlere Endzelle (20), die als Fahrgastzelle ausgebildet ist, wobei die seitlichen Stoßstangenbereiche (22, 23) und der mittlere Stoßstangenbereich (24) jeweils ein in sich struktursteifes Bauteil darstellen, welches im Falle einer teilüberdeckten Kollision mit einem Fahrzeug oder einem Hindernis unter Ausnutzung des Energieaufnahmepotentials der fahrzeugeigenen vorderen oder hinteren Endzelle (19, 21) eine schräge Ebene normal zur Fahrbahnoberfläche bildet und aufgrund ihrer Struktursteifigkeit bei einem Frontalanprall an ein Hindernis die auftretende Stoßkraft vom Kontaktpunkt in die verformbare, zugeordnete Endzelle weiterleitet, wobei die Stoßstange (8, 9) in ihrer Innenbreite die Spurbreite des Fahrzeuges (3) überdeckt und in Fahrzeuglängsrichtung von der Front- bis zur Vorderkante des Vorderrades bzw. vom Heck bis zur Hinterkante des Hinterrades verläuft.

2. Sicherheitsstoßstange nach Anspruch 1, dadurch gekennzeichnet, daß die Sicherheitsstoßstangen (8, 9) jeweils einteilig ausgebildet sind.

3. Sicherheitsstoßstange nach Anspruch 1, dadurch gekennzeichnet, daß die Stoßstangen (8, 9) aus Teilelementen (22, 23, 24) bestehen.

4. Sicherheitsstoßstange nach einem der Ansprüche 1 bis 3, dadurch gekennzeichnet, daß die Stoßstangen (8, 9) eine Höhe aufweisen, die nach unten hin bis unter die Höhe der Achse (12, 14) der Vorderräder (6, 7) bzw. der Hinterräder (4, 5) reichen und von dort nach oben hin etwa 80 % der Frontkontur des Fahrzeuges abdecken.

5. Sicherheitsstoßstange nach einem der vorhergehenden Ansprüche, dadurch gekennzeichnet, daß die vordere Sicherheitsstoßstange (8) an der Frontseite der Längs-träger (15, 16) des Fahrzeugrahmens angeordnet ist.

6. Sicherheitsstoßstange nach einem der vorhergehenden Ansprüche, dadurch gekennzeichnet, daß die gesamte Bugschürze als Sicherheitsstoßstange (8) ausgebildet ist.

## Claims

1. A safety bumper (8, 9) for a private car comprising a front end cell (19), a middle end cell (20) and a rear end cell (21), wherein the bumper is disposed in each case in front of or behind the wheels (4, 5; 6, 7) at the front or rear part of the vehicle (3), is of rounded construction at least in the transition to the side region, and the front end cell (19) and the rear end cell (21) have a lower resistance to deformation than the middle end cell (21), which is constructed as a passenger cell, wherein the lateral bumper regions (22, 23) and the middle bumper region (24) each constitute a component which is intrinsically structurally rigid and which in the event of a partially overlapping collision with a vehicle or an obstacle forms a slanting plane normal to the surface of the roadway by utilising the energy absorption potential of the of the front or rear end cells (19, 21) which are an intrinsic part of the vehicle, and which component, due to its structural rigidity, transmits the impact force which occurs on a frontal impact with an obstacle from the point of contact into the associated deformable end cell, wherein the internal width of the bumper (8, 9) overlaps the track width of the vehicle (3) and extends in the longitudinal direction of the vehicle from the front as far as the front edge of the front wheel or from the rear as far as the rear edge of the rear wheel.

2. A safety bumper according to claim 1, characterised in that the safety bumpers (8, 9) are each of one-piece construction.

3. A safety bumper according to claim 1, characterised in that the safety bumpers (8, 9) each consist of partial elements (22, 23, 24).

4. A safety bumper according to any one of claims 1 to 3, characterised in that the safety bumpers (8, 9) have a vertical extent which extends downwards to below the height of the axle (12, 14) of the front wheels (6, 7) or of the rear wheels (4, 5), and which upwards therefrom covers about 80 % of the front contour of the vehicle.

5. A safety bumper according to any one of the preceding claims, characterised in that the front safety bumper (8) is disposed on the front side of the longitudinal beam (15, 16) of the vehicle chassis.

6. A safety bumper according to any one of the preceding claims, characterised in that the entire rear apron is constructed as a safety bumper (8).

## Revendications

1. Pare-chocs de sécurité (8, 9) pour véhicules automobiles pour passagers comprenant une cellule terminale avant (19), une cellule terminale centrale (20) et une cellule terminale arrière (21), le pare-chocs étant monté sur la partie avant ou arrière du véhicule (3), respectivement en avant ou en arrière des roues (4, 5 ; 6, 7), étant de configuration arrondie au moins dans le raccordement avec la région latérale, et la cellule terminale avant (19) et la cellule terminale arrière (21) présentant une résistance à la déformation plus faible que celle de la cellule terminale centrale (20), qui constitue la cellule d'habitacle, les régions latérales (22, 23) du pare-chocs et la région centrale (24) du pare-chocs représentant chacune un élément de structure rigide en soi qui, dans le cas d'une collision à chevauchement partiel avec un véhicule ou avec un obstacle, et en utilisant le potentiel d'absorption d'énergie de la cellule terminale avant ou arrière (19, 21) propre au véhicule, forme un plan oblique perpendiculaire à la surface de la chaussée et, grâce à sa rigidité de structure, dans le cas d'un choc frontal sur un obstacle, transmet la force de choc exercée depuis le point de contact jusqu'à la cellule terminale déformable correspondante, le pare-chocs (8, 9) recouvrant, dans sa largeur intérieure, la largeur de la voie du véhicule (3) et s'étendant de l'avant jusqu'au bord avant de la roue avant ou respectivement, de l'arrière jusqu'au bord arrière de la roue arrière.

2. Pare-chocs de sécurité selon la revendication 1, caractérisé en ce que les pare-chocs de sécurité (8, 9) sont réalisés chacun en une seule pièce.

3. Pare-chocs de sécurité selon la revendication 1, caractérisé en ce que les pare-chocs (8, 9) sont composés d'éléments partiels (22, 23, 24).

4. Pare-chocs de sécurité selon une des revendications 1 à 3, caractérisé en ce que les pare-chocs (8, 9) présentent une hauteur qui se prolonge vers le bas jusqu'au-dessous de la hauteur de l'essieu (12, 14) des roues avant (6, 7) ou des roues arrière (4, 5) et, à partir de là, elle s'étend vers le haut et couvre à peu près 80 % du contour avant du véhicule.

5. Pare-chocs de sécurité selon une des revendications précédentes, caractérisé en ce que le pare-chocs de sécurité avant (8) est monté sur le côté avant des longerons (15, 16) du châssis du véhicule.

6. Pare-chocs de sécurité selon une des revendications précédentes, caractérisé en ce que la totalité du bouclier avant constitue le pare-chocs de sécurité (8).
